Europäisches Patentamt

European Patent Office

Office européen des brevets

(19)

(11) **EP 1 401 189 A1**

(12) **EUROPEAN PATENT APPLICATION**

(43) Date of publication:
**24.03.2004 Bulletin 2004/13**

(51) Int Cl.⁷: **H04N 1/405**, H04N 1/52

(21) Application number: **02102364.3**

(22) Date of filing: **17.09.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **AGFA-GEVAERT**
**2640 Mortsel (BE)**

(72) Inventors:
• **Minnebo, Luc,**
  **AGFA-GEVAERT, Corporate-IP Dpt 3800**
  **B-2640 Mortsel (BE)**
• **van de Velde, Koen, Corporate IP Dept. 3800**
  **2640 - Mortsel (BE)**
• **Delabastita, Paul,**
  **c/o AGFA-GEVAERTE Corp.IP Dept**
  **2640 - Mortsel (BE)**

(54) **FM screening with sub-dot phase modulation**

(57)     In an error diffusion halftoning process a clusters of adjacent pixels can be placed at any arbitrary position of the pixel grid.

The quantization step of the error diffusion takes into account the effect of placement of a cluster of pixels. The size of a pixel cluster may be fixed or variable.

The quantization step of the halftoning process may take into account the effect of the placement of a cluster of pixels in the same or in a different color separation.

The method produces halftones that are less grainy and that print more robustly and uniformly in the presence of printer variability.

The quantization step in the error diffusion process according to one representative embodiment of the invention evaluates quantization values of possible alternatives in placing the clusters of pixels.

P'(i,j)

Preparation of two alternatives:

First alternative: place a BLACK halftone dot:
r: number of H(x,y) that change value from 0.5 to 0.0;
s: number of H(x,y) that change value from 1.0 to 0.0
Q1(i,j) = 0.5 - r*0.5 - s*1.0;

Second alternative: Place a WHITE halftone dot:
t: number of H(x,y) that change value from 0.5 to 1.0;
u: number of H(x,y) that change value from 0.0 to 1.0
Q2(i,j) = 0.5 + t*0.5 + u*1.0;

Evaluation of both
quantization alternatives:
abs(P'(i,j) - Q1(i,j))
<
abs(P'(i,j) - Q2(i,j))

YES                                              NO

Quantization step:
set BLACK pixels H(x,y);
Q((i,j)=Q1(i,j);

Quantization step:
set WHITE pixels H(x,y));
Q((i,j)≈Q2(i,j);

Error calculation step:
E(i,j) = P'(i,j)-Q(i,j)

Error diffusion step:
P'(i,j+1)    = P'(i,j+1)+E(i,j)*7/16
P'(i+1,j-1) = P'(i+1,j-1)+E(i,j)*1/16
P'(i+1,j)    = P'(i+1,j)+E(i,j)*5/16
P'(i+1,j+1)= P'(i+1,j+1)+E(i,j)*3/16

H(x,y)

Fig. 19

EP 1 401 189 A1

## Description

FIELD OF THE INVENTION

The present invention relates to frequency modulation halftoning such as frequency modulation performed by means of error diffusion. The method is particularly suited for frequency modulation halftoning on systems that print with halftone dots that are larger than the size of one addressable pixel.

BACKGROUND OF THE INVENTION

### *The purpose of screening*

A continuous tone image is an image containing multiple tone levels with no perceptible quantization steps. The purpose of screening (also called halftoning in this text) is to render continuous tone images on a printing device with a low tonal resolution, such as an offset printing press, which can only print two tone levels corresponding to ink and no ink.

A binary halftoning technique converts the density values of a continuous tone image into a geometric distribution of binary halftone dots that can be printed on a binary printing device.

Each halftone dot is represented by one pixel or a clustered set of pixels. A pixel is the smallest addressable element of an image reproduction device.

When the halftone dots are small enough, the eye is not capable of seeing the individual halftone dots, and only sees the corresponding spatially integrated density value.

The two main classes of halftoning techniques that are used are known as "amplitude modulation screening" (abbreviated as AM screening) and "frequency modulation screening" (abbreviated as FM screening).

### *Amplitude and frequency modulation screening*

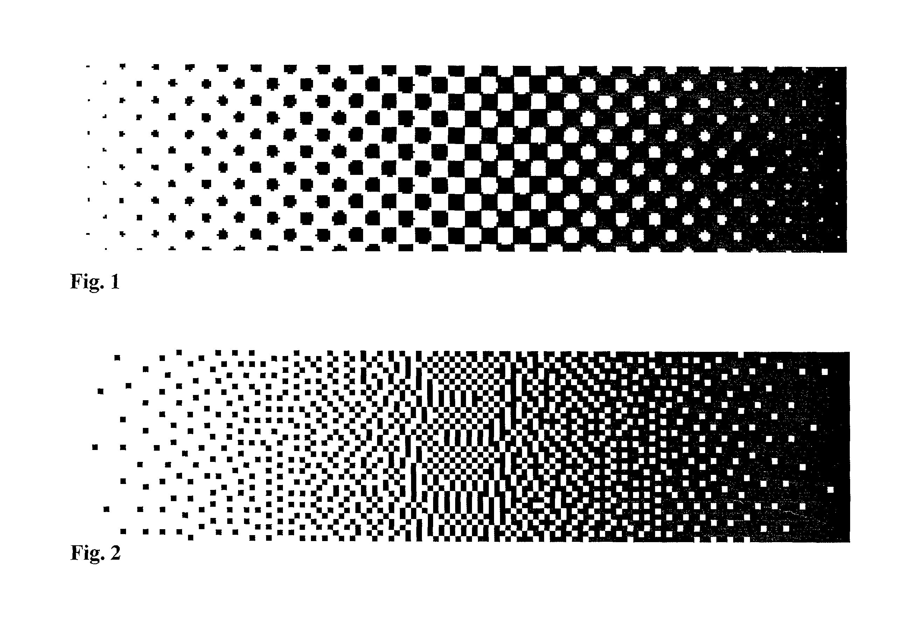

According to amplitude modulation screening, the halftone dots, that together give the impression of a particular tone, are arranged on a fixed geometric grid. By varying the size of the halftone dots, the different tones of an image can be simulated. Figure 1 shows a degrade rendered with AM screening.

According to frequency modulation screening, the distance between the fixed sized halftone dots is modulated to render different tone values. Figure 2 shows the same degrade as in Figure 1, but rendered with FM screening. Frequency modulation is sometimes called "stochastic screening", because most FM screening algorithms produce halftone dot patterns that are stochastic (non-deterministic) in nature.

Both AM and FM halftoning have advantages and disadvantages.

### *AM screening*

The main advantage of AM halftoning is that it can be efficiently performed by means of optical, electronic, or digital techniques. A particularly efficient digital implementation is given in US 4,185,304 by Thomas Holladay. A second advantage is that images that are halftoned with screens having approximately 7 dots per mm (175 dots per inch, 175 dpi) can be consistently and robustly printed on commercially available offset printing presses and produce good image quality. These two reasons explain why AM screening has been the method of choice for most offset printing work in the graphic arts industry.

Since in AM halftoning the halftone dots are laid out on a periodical grid that is characterized by a fixed frequency and angle, this grid may be subject to geometrical interactions with other patterns. These interactions sometimes show up under the form of moiré.

A first possible source of moiré is the interaction that occurs between the different halftone screens that are used in color printing. A solution to deal with this form of moiré is presented in the patent US 5,155,599 by Paul Delabastita. In this patent a technique is presented that is convenient and elegant and avoids the introduction of low frequency moiré in four-color printing. It does not deal, however, with the introduction of a rosette-like micro moiré that is typical in four-color printing. Even the improvement proposed in US 5,828,463 by Paul Delabastita does not eliminate the rosette-like micro moiré, only making it less conspicuous. In the latter patent it is also explained that a relation exists between the relative phase of the screens used in color printing and resulting color balance. The method in the disclosure improves this color balance with regard to standard screening, but it should be remarked that this improvement only works in case of perfect registration between the ink separations. If misregistration occurs, a color balance shift is again introduced.

A second source of moiré is the interaction that can occur between a halftone pattern and the addressable grid of pixels on which it is rendered. If the resolution of this grid is too low with regard to the frequency of the halftone screen, a periodical spatial rounding off effect occurs that becomes visible as a "linen-like" artifact or as low frequency moiré. To some extent, this problem can be dealt with by adding positional noise to the centers of gravity of the halftone dots. The patent US 5,774,229 by Paul Delabastita presents such a method. This solution allows rendering screens with slightly higher frequencies on a recorder with a given resolution. When screens with even higher frequencies are produced, however, the linen-like and low frequency effects reoccur.

A third source of moiré results from geometrical interactions of the halftone screen with periodical contents in the image itself. This effect is often called "subject moiré". Increasing or decreasing the frequency of a halftone screen does not resolve this problem fundamentally, as it merely changes the range of frequencies in the original image at which the problem occurs. A solution to deal with subject moiré was suggested by Paul Roetling in US 4,051,536 and the accompanying article in the Journal Opt. Soc. Amer. Vol. 66, No. 10, pp. 985-989, October, 1976. His algorithm has been known as the ARIES algorithm. Although this method certainly helps to reduce subject moiré, it does not completely eliminate it. Furthermore, it does not deal with the other disadvantages of AM halftoning.

### *FM screening*

It is generally thought that FM screening solves the above problems that are associated with AM screening. Since the centers of the halftone dots in FM screening are not explicitly laid out on a fixed grid, there are no periodic interactions expected, as is the case in AM screening.

Three methods are widely used to produce FM screens.

A first method relies on comparing an image on a pixel-by-pixel basis with a threshold function to obtain FM-screened images. Methods to obtain such a threshold function are described in the patents US 5,535,020, US 5,745,259, US 5,912,745 and US 6,172,773 by Robert Ulichney and in the patents US 5,543,941, US 5,708,518 and US 5,726,772 by Theophano Mitsa and Kevin Parker.

Lawrence Ray and James Sullivan explain a second method in WO91/12686. According to this method, continuous tone images are directly converted into frequency modulation halftones by addressing in a tone dependent way precalculated bitmaps that are stored in a memory.

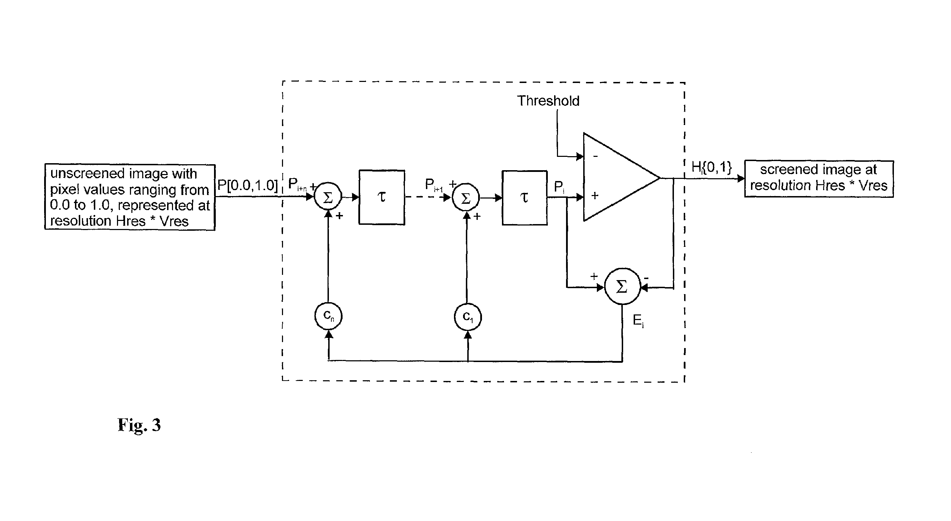

A third method for frequency modulation was originally invented by Floyd and Steinberg and is called error diffusion. Figure 3 explains how it works. The continuous tone pixel values P have a range from 0.0 (full black) to 1.0 (full white). A modified pixel value Pi of the unscreened image is compared with a fixed threshold T. If $P_i$ is smaller than T, $H_i$ is set to 0.0 and a black pixel is printed, else $H_i$ is made equal to 1.0 and a white pixel is printed. The binarization of $P_i$ introduces a quantization error $E_i$ equal to $P_i$-$H_i$. According to the error diffusion scheme, this quantization error value is added to one or more of the unscreened pixels $P_{i+x,j+y}$. Different pixels receive different fractions of the original error and this is controlled by means of "diffusion weights" $c_1$ to $c_n$. The sum of the diffusion weights always adds up to one. Because this scheme acts like a feedback loop, the average quantization error value converges to zero in steady state.

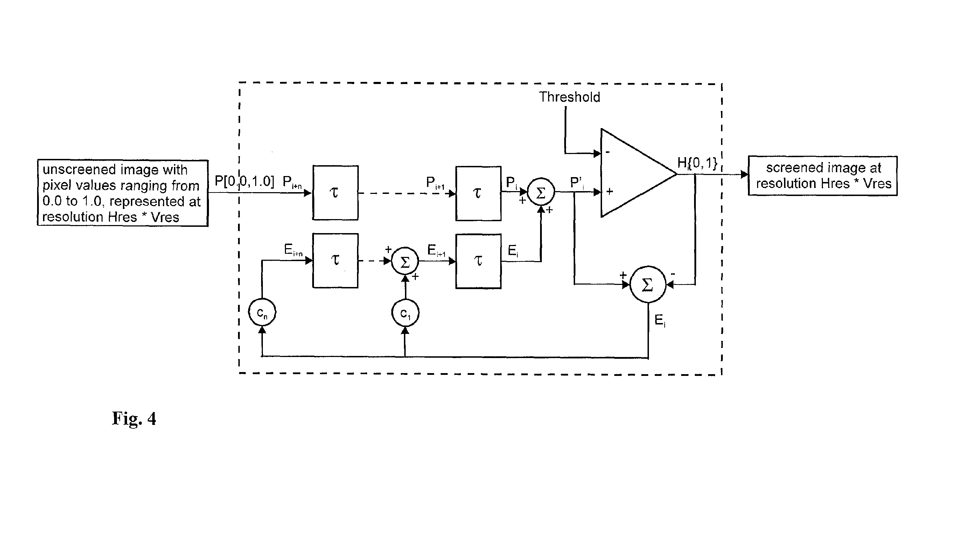

An alternative implementation of error diffusion is shown in Figure 4. The accumulated diffused quantization error is kept in separate buffers and only added to the original pixel $P_i$ value just before quantization.

Robert Ulichney describes a number of enhancements over the original error diffusion algorithm in US 4,955,065. This patent describes the use of a serpentine scan to process the input pixel values, the addition of noise on the threshold and the perturbation of the error diffusion weights to obtain more a uniform and isotropic halftone dot distribution.

Significant improvements of the original error diffusion scheme are also described in the patents US 5,045,952 and US 5,535,019, both by Reiner Eschbach. According to the disclosure in these patents, the threshold is modulated to either obtain an edge enhancement effect (first patent) or to improve the homogeneity of the halftone dot distributions in high and low intensity image regions (second patent). In US 5,070,413 James Sullivan explains an improvement for screening color images by performing error diffusion in a colorant vector space as opposed of doing scalar error diffusion for each of the colorants individually. Koen Vande Velde presented a further improvement of this idea at the International Conference on Digital Printing Technologies conference (proc. NIP17, IS&T 2001). His algorithm consists of a vector error diffusion scheme in which the quantization of a color into a set of inks is constrained by the output from an additional preprocessing step in such a way that luminance variations - and correspondingly halftoning graininess - are minimized in the final output. In US 5,565,994 by Eschbach proposes a method that aims for a similar objective but works differently.

An improvement that is relevant with regard to our invention is also found in US 5,087,981 by Yee Ng. In this patent Yee Ng describes the use of a printer model that takes into account halftone dot overlap to compensate for the non-linearity of printer gradation. In US 5,854,882 by Shenge Wang, a practical method is described to characterize the dot overlap of a printer. Similar concepts regarding introducing printer models and models of the human visual system are described in the articles "Measurement of printer parameters for model based halftoning" by Thrasyvoulos N. Pappas, Chen-Koung Dong and David L. Neuhoff, published in the Journal of Electronic Imaging, July 1993 Vol. 2(3), pp 193-204. David Neuhoff patents some of the concepts presented in this article in US 5,463,472. In US 6,266,157, Zhigang Fan also explains a practical and efficient approach to model and calibrate the effects of dot overlap into an error diffusion scheme.

Victor Ostromoukhov points out in his presentation "A Simple and Efficient Error-Diffusion Algorithm", published in the proceedings of the SIGGRAPH2001 conference, that more uniform halftone dot distributions are obtained at various tone values by adjusting the diffusion weights as a function of tone.

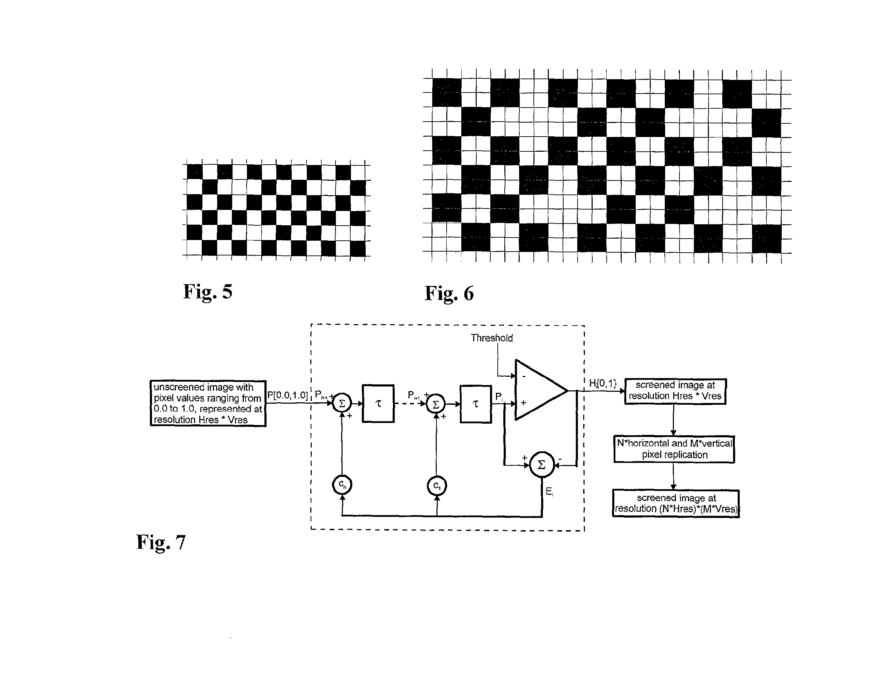

In the standard FM halftoning algorithms, it is implicitly assumed that the size of the printed halftone dots is the same as the size of the pixels of the addressable grid of the printer and also corresponds with the size of the pixels in the original image. This is essentially the situation as shown in Figure 5 This assumption can create problems in printing processes where halftone dots with the size of one pixel are too small to be properly rendered. An example of such a printing process is the electrophotographic printing process. A possible solution for this problem is disclosed in US 5,374,997 by Reiner Eschbach in which he proposes the use of an error diffusion method that makes the halftone dot n by m times larger than the size of the addressable pixels of a printer.

In one of the embodiments, shown in Figure 7, he explains that by means of counters the preliminary output pixels of an error diffusion process can be replicated N times horizontally and M times vertically to obtain larger halftone dots. The output of this scheme for the case that N=M=2 is shown in Figure 6.

Having discussed both AM and FM screening, we should also mention the existence of "hybrid screening". Delabastita et al. disclose an example of such a technique in US 5,766,807. According to this technique, the modulation of density in the midtones is mainly achieved by changing the size of halftone dots that are arranged on a fixed grid, while in the highlights the modulation of density is achieved by altering the number of fixed sized halftone dots.

### Drawbacks of the state of the art, objectives of the invention

In what follows, we will concentrate on FM-screening based on error diffusion, although the aspects of our invention are easily applicable for use in combination with other FM screening techniques.

Despite its advantages and qualities, there are still some problems associated with error diffusion FM screening.

### Artifacts near "rational tonal values" (1/4, 2/4, 3/4, 1/9, 2/9, 3/9, etc.)

A first problem of the original error diffusion as published by Floyd and Steinberg, is that it does not behave well around the tone value of 1/2 and tone values that are multiples of 1/4 and 1/3. At and around these tone values, the standard error diffusion algorithm produces halftone dot distributions that are highly phase correlated, i.e. the dot distributions tend to be organized in locally regular, self-repeating patterns.

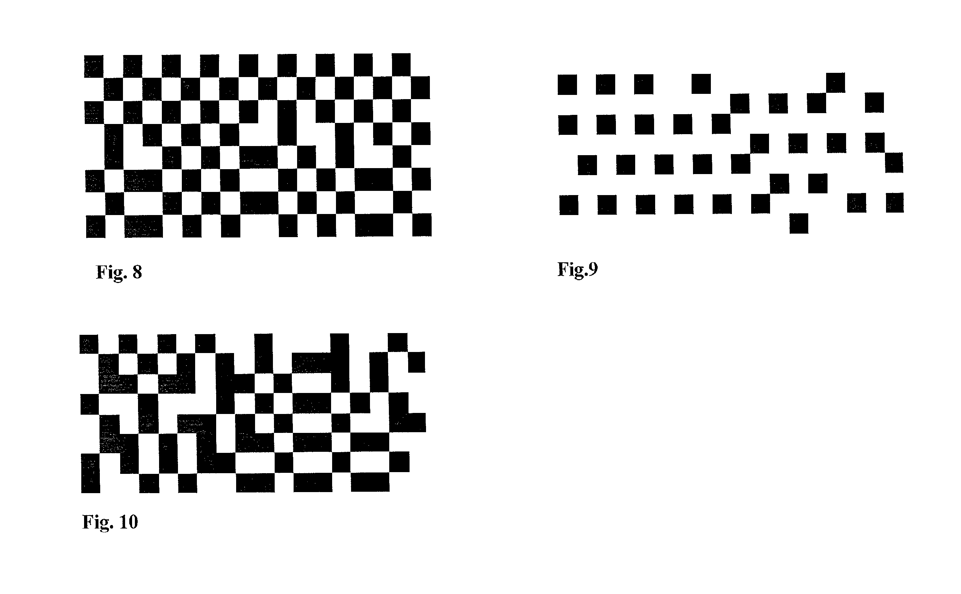

To explain why this problem occurs, we will concentrate first on the behavior of the Floyd and Steinberg algorithm near 50%. When Floyd and Steinberg error diffusion is performed on a tint with exactly a 50% tone value, all of the halftone dots are laid out in a checkerboard configuration. This pattern is indeed the most optimal distribution of halftone dots for this tint as it minimizes the average distance between the dots and hence also minimizes the visibility of the halftone dot pattern. For tone values just above 50% tone value, however, the algorithm will introduce an extra white pixel here and there in order to produce the correct average tone value. This extra white pixel will inevitably disturb the phase of the checkerboard pattern. Figure 8 shows an example in which a tone value of 128/255 was rendered by means of standard Floyd and Steinberg error diffusion. These local phase shifts disturb the otherwise regular pattern, and are picked up by the eye as a disturbing artifact. A similar situation occurs for tone values just below 50%.

A similar problem also exists around the 75% tone value. At exactly 75%, Floyd and Steinberg error diffusion produces a pattern in which one out of four pixels is black and three out of four pixels are white, with all the pixels arranged in a repeating two by two matrix pattern. Just above and below this tone value, this regular pattern is disturbed by the introduction of an extra white or black pixel. An example of a 192/255 tonal value rendered with Floyd and Steinberg is shown in Figure 9. A similar behavior is seen around a tonal value of 25% and near tonal values that are multiples of 1/9 or 1/16.

Robert Ulichney already recognized the above problems, and the method he proposes in US 4,955,065 is effective in reducing the above undesirable artifacts. However, the use of a random element in his algorithm also introduces graininess into the image. Furthermore does his method diffuse the artifacts, rather than fundamentally suppressing them.

This statement is appreciated by comparing the halftone rendered with standard Floyd and Steinberg error diffusion and shown Figure 8 with the halftone rendered using the improved according to Ulichney method and shown in Figure 10.

*It is an objective of the invention to avoid the introduction of objectionable artifacts in FM* screening without introducing graininess in the halftoned image.

### Phase correlated dot positions may introduce low frequency graininess or patterns in color printing

A consequence of correlated dot positions within a single separation is that it indirectly leads to phase correlation of the dot positions in the different ink separations in the case of color printing. This may introduce low frequency artifacts such as patterns and noise. Moreover, these artifacts shift and change unpredictably in the presence of misregistration between the separations.

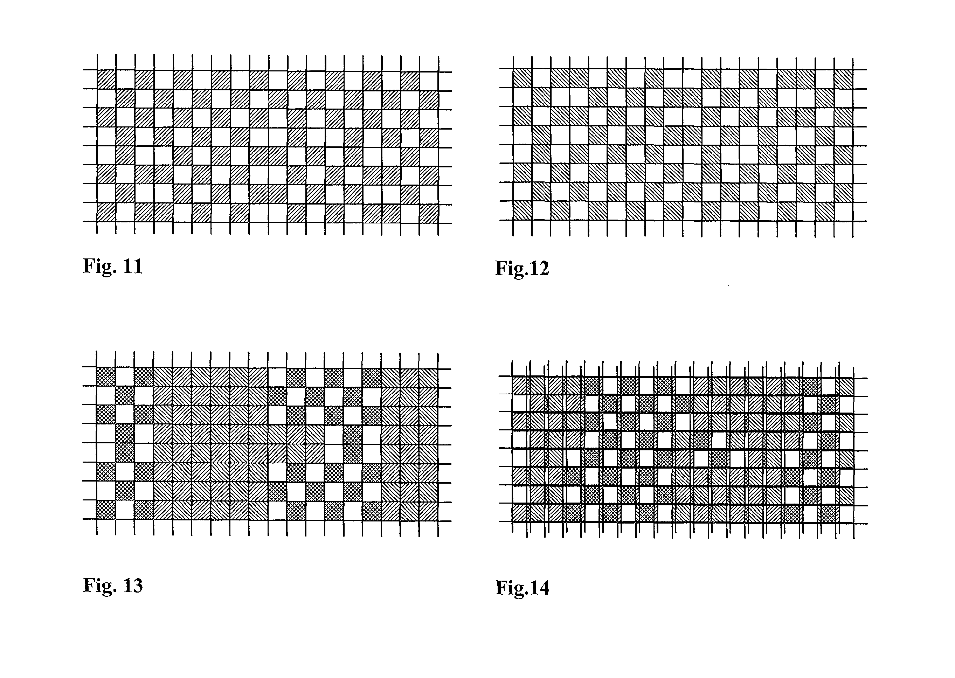

We explain this by means of an example. Imagine a color that is printed with cyan and magenta ink separations, both having a value of 128/255. The Floyd and Steinberg algorithm produces for these tint values dot distributions that look like in Figure 11 and Figure 12.

When these two separations are printed on top of each other in nearly perfect register as in Figure 13, they produce four possible ink overlap combinations: no ink, only cyan ink, only magenta ink, or cyan and magenta ink overprints. Because of the phase correlation of the halftone dots in the original separations, the overlap combinations themselves will also be correlated. In Figure 13 this leads to two sorts of areas. In a first sort of area, most of the cyan and magenta dots fall on top of each other and produce a matrix of cyan and magenta overprinted dots and white spaces. In a second sort of area most of the cyan and magenta dots fall in between each other and produce a matrix of magenta and cyan dots with no or few white spaces present. Both sorts of areas produce a different color since the colorimetric addition of white and cyan on top of magenta dots does not yield exactly the same color as the colorimetric addition of cyan and magenta dots. The net result is that the color balance is not stable across the printed reproduction and that the print will appear blotchy.

When the registration between the two separation changes as in Figure 14, for example due to some mechanical instability of the printer or the substrate, the areas of the first kind may turn into areas of the second kind and vice versa. So not only is the color balance unstable across the print, it also varies with the registration of the printer and becomes unpredictable in the presence of misregistration. As both Figure 13 and Figure 14 show, the correlated artifacts in the individual separations can give yield to low frequency patterns that were not present in any of the original separations and that change as a function of the registration between the original separations.

What the above explanation shows is that correlation of the halftone dot positions can result in low frequency graininess and patterning, and in locally unstable color balance in the presence of misregistration.

The existing art uses the introduction of a random element such as the perturbation of weights or the addition of noise to the threshold in error diffusion to break up the phase correlated dot positions, but this - as was mentioned before - also introduces graininess in the halftoned image.

*It is an objective of the invention to improve the stability and predictability of the color balance in frequency modulation halftoning for color printing and to avoid the introduction of low frequency artifacts without introducing graininess into the image.*

### *The fixed halftone dot size in error diffusion represents a compromise*

The method presented in US 5,374,997 by Eschbach discloses the generation of halftone dots, consisting of adjacent pixels, that are N by M times larger than the size of one pixel of a printing device. In reality, the choice of the optimal values for "N" and "M" represents a compromise between stability of printing, graininess and detail rendition.

A major cause of instability of printing density and color balance are the effects (deterministic or stochastic in both space and time) near the boundaries of halftone dots. This explains why large halftone dots, having less boundary length for covering the same total area, generally print more stable than small halftone dots. This argument favors using larger halftone dots consisting of clusters with more adjacent pixels. This is particularly the case for midtone reproduction, since the total amount of halftone dot circumference and the effect of printer variability are largest in that part of the tone scale.

The use of large, fixed sized halftone dots, however, has also drawbacks. For a given tone value, the use of larger halftone dots also leads to a larger average distance between them, and particularly in the highlights and shadow tones, where this distance is already at its largest, this may lead to visibility of the halftone patterns and a grainy appearance. So this argument actually favors the use of clusters consisting of fewer pixels.

Large, fixed sized halftone dots may also compromise detail rendition. The proper rendering of fine textures, for example, benefits from printing with small pixel clusters. For the rendering of text and line art, the cluster size preferably even is only one pixel, as this allows for full resolution rendering of the contours of these elements.

*These observations indicate the need to devise a new frequency modulation halftoning method, the object of which is to minimize halftoning graininess, to optimize the rendering of textures, fine detail, text and line work, while at the same time optimizing the stability of the color balance and contrast, even in the presence of variations in the printing process.*

### SUMMARY OF THE INVENTION

The above-mentioned advantageous effects are realised by methods having the specific features set out in claim 1. Specific features for preferred embodiments of the invention are set out in the dependent claims.

Further advantages and embodiments of the present invention will become apparent from the following description and drawings.

The invention is based on the observation that frequency modulation halftoning, when taken by itself, is not necessarily stochastic in nature. It is desirable to have a frequency modulation technique in which fixed sized halftone dots are laid out on a periodical square or hexagonal grid, in which the distance between all the halftone dots is identical and in which the modulation of the tone values is achieved by varying the distance between the halftone dots in a continuous way. At each tonal level, the halftone dot distribution would be completely deterministic and periodic.

It is clear that such a frequency modulation halftone would not suffer from phase correlated artifacts near the rational tonal values as they were previously described while at the same time the level of graininess in the halftone dot distributions would be very low. Such a halftoning technique would hence approximate the characteristics of an ideal frequency halftoning algorithm.

Unfortunately, the modulation of the frequency of the halftone dot distribution in a continuous way requires a recording system in which the halftone dots can be positioned with infinitely high precision and hence that has an infinitely high addressability. Such recording systems do not exist in the real world.

By using the method according to the invention the characteristics of the above ideal frequency modulation technique are approximated by using an addressability for the recording system that is not infinite but that is substantially higher that the size of the halftone dots consisting of a cluster of adjacent pixels. By allowing the distance between the halftone dots to be modulated in much smaller increments than the size of the halftone dots themselves, a frequency modulation halftoning system is obtained that approximates the ideal of a continuous frequency modulation and that offers similar advantages in suppressing artifacts near rational tonal values. We call this principle "sub-dot phase modulation". Since with sub-dot phase modulation the position of the halftone dots is controlled with a precision that exceeds the size of the halftone dot, the relative position between the halftone dots can also be controlled with much greater accuracy than in standard frequency modulation. This principle also opens up the possibility to control the artifacts in color printing due to correlated dot positions in different separations in a much better way.

An error diffusion method having the specific features of the claims is able to modulate the distance between the halftone dots by taking into account the effect of density value changes caused in an area in the output image by placement of a cluster of pixels.

It is characterized in that it is possible to place halftone dots, consisting of plural adjacent pixels to be placed at any arbitrary position of the pixel grid.

Having explained the general concept of our invention, we would like to describe a first embodiment of sub-dot phase modulation.

Having explained the basic principles of our invention, we will now explain the details of the preferred embodiments to perform frequency modulation with sub-dot phase modulation according to our invention.

BRIEF DESCRIPTION OF THE DRAWINGS

Figure 1 : shows a degrade rendered with AM screening
Figure 2 : shows the same degrade of Fig. 1 rendered with FM screening
Figure 3 : shows a basic error diffusion scheme.
Figure 4 : shows an alternative implementation of an error diffusion scheme.
Figure 5 : shows a frequency modulation halftoning of a tint with the value 5/9 without pixel replication
Figure 6 : shows a frequency modulation halftoning of a tint with the value 5/9 with two by two pixel replication
Figure 7 : gives the result of a method using pixel replication to obtain clustered halftone dots with improved printing properties
Figure 8 : gives a representatin of a tone value of 128/255 rendered with standard Floyd and Steinberg error diffusion
Figure 9: shows a tone value of 192/255 rendered with Floyd and Steinberg error diffusion
Figure 10:shows a tone value of 128/255 rendered with Floyd and Steinberg error diffusion with serpentine scan and 50% noise on the threshold
Figure 11:is an example of a possible cyan separation with a value of 128/255 as rendered with standard Floyd and Steinberg error diffusion
Figure 12:gives an example of a possible magenta separation with a value of 128/255 as rendered with standard Floyd and Steinberg error diffusion
Figure 13:shows a representation of an overprint of the separations in Figure 11 and Figure 12 in nearly perfectly registration
Figure 14:shows a representation of an overprint of the separations in Figure 11 and Figure 12; the two separations are slightly out of register
Figure 15:shows frequency modulation halftoning of a tint with the value 5/9 followed by two by two pixel replication
Figure 16:depicts frequency modulation halftoning of a tint with the value 5/9 with introduction of a random element to break up artifacts due to phase correlated dot positions, and followed by two by two pixel replication
Figure 17:gives a frequency modulation halftoning of a tint with the value 5/9 with two by two pixel replication and sub-dot phase modulation

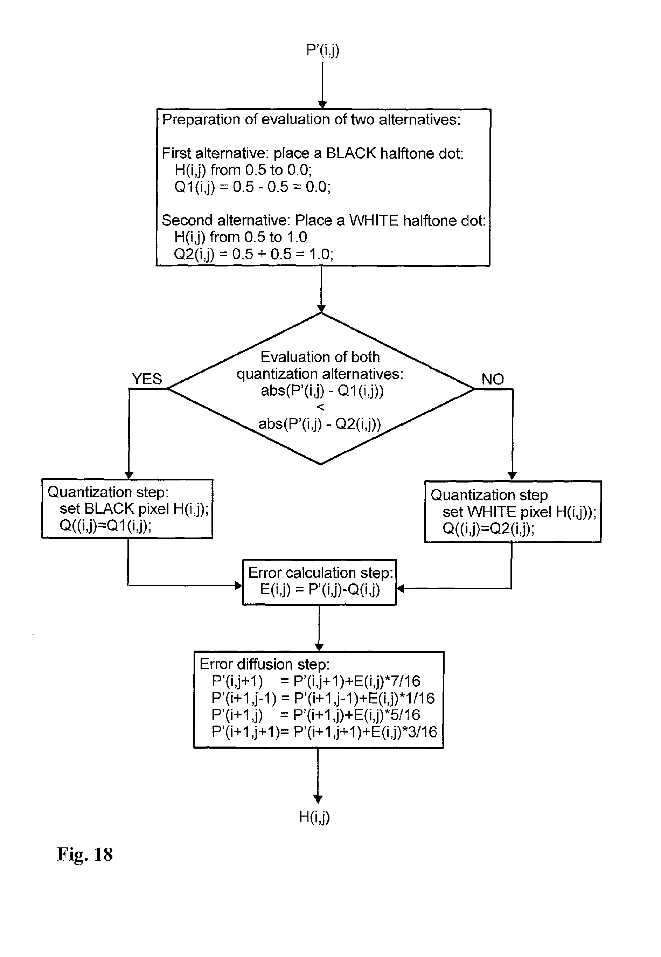

Figure 18:depics a flowchart describing an alternative interpretation of the quantization process in standard error diffusion
Figure 19:shows a flowchart describing the quantization process in error diffusion with sub-dot phase modulation
Figure 20A to 20G: Show different cases of quantization according to error diffusion with sub-dot phase modulation
Figure 21:depics an error diffusion scheme with sub-dot phase modulation and tone dependent variable dot size

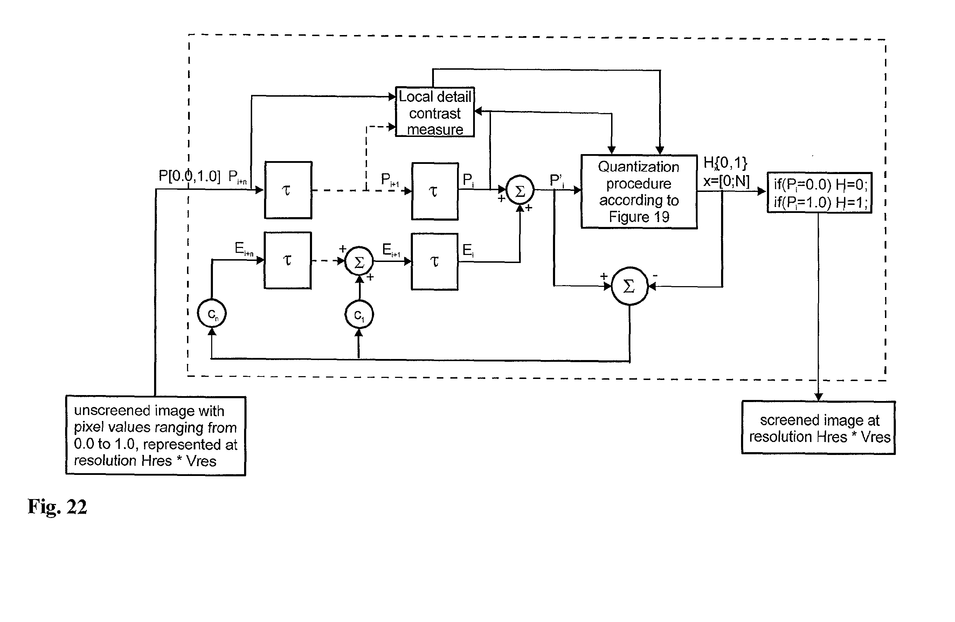

Figure 22:show a error diffusion scheme with sub-dot phase modulation and dot size depending on both the tone value and the local contrast
Figure 23:shows the rendering of a image by frequency modulation halftoning using state of the art error diffusion
Figure 24:gives the result of error diffusion with sub-dot phase modulation

Figure 25:shows the result of frequency modulation halftoning with sub-dot phase modulation and variable sized dots.

DETAILED DESCRIPTION OF THE INVENTION

***Results of the invention in practice***

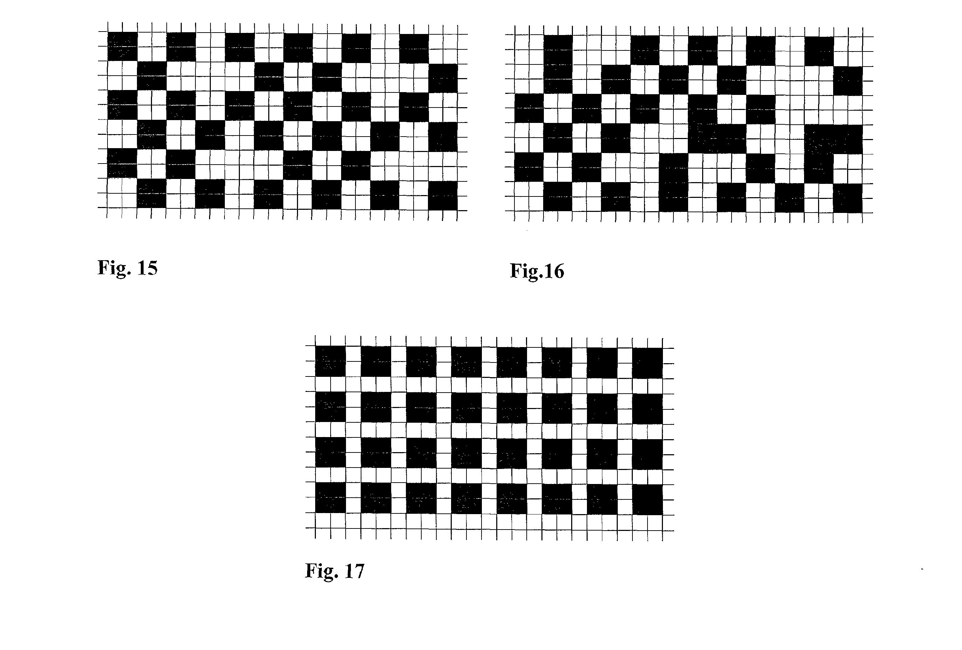

Figure 5 shows the case of a tint with a value of 5/9 rendered with standard error diffusion. Figure 6 and Figure 15 show the same tint, but in combination with two by two pixel replication as described in US 5,374,997 by Reiner Eschbach. The tint clearly shows artifacts due to phase correlated dot positions. Figure 16 shows once again the same tint rendered with the same error diffusion except that threshold is modulated with random numbers and that the weights are perturbed according to improvements in US 4,955,065 by Robert Ulichney. The artifacts due to phase correlated dot positions have now improved, but the tint now appears grainy. Figure 17 finally shows the same tint again but now rendered with a frequency modulation technique that employs sub-dot phase modulation according to our invention and without that any random element was introduced. The Figure 17 clearly shows that there are no artifacts as of the kind in Figure 15, while the graininess is significantly obviously much less than in Figure 16. Our invention hence enables to avoid artifacts due to phase correlated dot positions without introducing graininess in the halftone.
The improvement shown in Figure 17 is obtained by means of a modified error diffusion process.

***Further definitions***

We define an error diffusion process as follows: a method for converting an image consisting of unprocessed input pixels having n1 possible values representing optical densities into an output image represented by processed pixels having n2 possible values representing optical densities, where $1<n2<n1$. The processing of a pixel comprises:

- a quantization step in which the value of a processed pixel is determined from the value of a modified pixel;

- an error value calculation step in which the difference between the modified and the processed pixel is determined;

- an error diffusion step in which at least one unprocessed pixel is modified by at least a portion of the quantization error value.

The modification of the error diffusion scheme according to our invention consists of:

- a quantization step in which the value of at least two processed pixels forming a cluster are determined from the value of a modified pixel.

- an error calculation step in which the difference between the modified and the processed pixels is determined;

- an error diffusion step in which at least one unprocessed pixel is modified by at least a portion of the quantization error value.

By determining during the quantization step immediately a group of nxm processed pixels, halftone dots can be obtained that are nxm times larger than the size of an individual addressable pixel. However, because the error diffusion is still performed at the full resolution of the recording device, the phase (or position) of the halftone dots is controlled at the full resolution of the recording device. The net result is an error diffusion scheme with sub-dot phase control that offers the advantages shown in Figure 17.
The method according to the invention can be employed in combination with the principles as thought in the application "improved color halftoning for printing with multiple inks" in EP 1 239 662 and in the patent US 5,535,019 "error diffusion halftoning with homogeneous response in high/low intensity image regions".
An output apparatus reproduces an image by placing e.g. a black dots on a white paper. The smallest recording element of a recorder is called a pixel. A recording apparatus is normally only capable of placing pixels at certain positions which are determined by the resolution or addressability of the recording system. This is determined by e.g. the resolution of the recording head or smallest steps which can be taken by e.g. a paper transport system.
All pixels are located on a pixel grid having a certain resolution. The horizontal and vertical resolution can be the same E.g. a electrographic device can have a resolution of 16x16 pixels/mm (400x400 dots per inch). Other systems the two directions can have a different resolution, e.g. a ink jet printing system having a resolution of 192 x 48 dots/mm ( 4800 x 1200 dpi ). The pixels which are the smallest recording elements are thus located on the pixel grid. Halftone dots are build from a plurality of adjacent pixels. It is the halftoning algorithm used which determines the position where the halftone dots will be placed.

***Standard error diffusion***

Before explaining in detail a method according to the invention, we start by presenting the standard error diffusion process from a slightly unconventional perspective by way of reference.
In what follows, we take on the convention that the origin (0,0) of the image corresponds with the top left corner, that the value 0.0 represents "black", while 1.0 represents "white". Placing a halftone dot means printing a black spot on a white canvas.

We define P(x,y) as the input pixels or input pixel value of the original image, P'(x,y) as the modified pixels of the original image modified with a contribution of the error made on previous processed pixels obtaining a modified pixel value, and H(x,y) as the pixels of the halftoned output image. The error diffusion process will transform every input pixel P(x,y) into a halftone output pixel H(x,y).

Before the processing starts, the output pixel values of the halftoned image are all preset to 0.5. According to the approach, the error diffusion process consists of replacing the preset values of H(x,y) by either 0.0 or 1.0 in a way that an optimal halftone rendering is obtained of the original image.

The processing of an image normally is performed line by line, starting at the top of the image. Within a line, the processing takes place from left to right, or from right to left, or-preferably - alternating between these two directions as suggested by Robert Ulichney in US 4,955,065. The latter approach is called "serpentine scan".

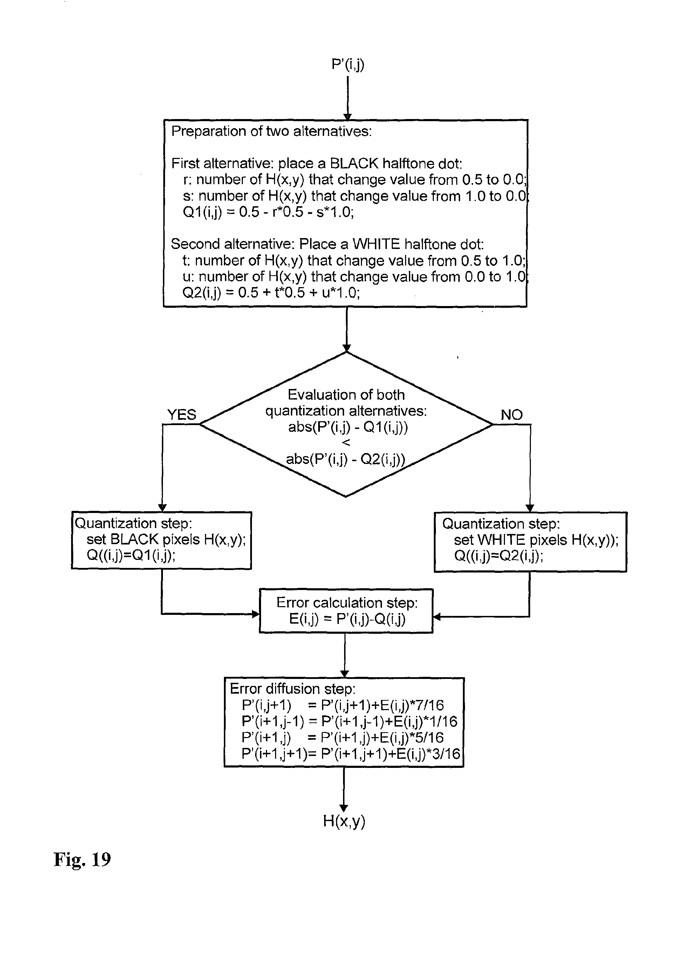

The processing of a pixel P'(i,j) at position (i,j) consists of the following steps that are also represented in Figure 19.

1) Determining a quantization set consisting of the two possible quantization values $Q_1(i,j)$ and $Q_2(i,j)$ that correspond to the available distinct cases of:

a. Converting the gray pixel H(i,j) into a black pixel by decreasing the preset halftone value H(i,j) from 0.5 to 0.0; The quantized value $Q_1(i,j)$ in that case is 0.0;

b. Converting the gray pixel H(i,j) into a white pixel by increasing its value from 0.5 to 1.0. The quantized value $Q_2(i,j)$ in that case is 1.0.

2) If $Q_1(i,j)$ is closer to P'(i,j) then H(i,j) is set to 0.0 and Q(i,j)= $Q_1(i,j)$ else H(i,j) is set to 1.0 and Q(i,j) =$Q_2(i,j)$. Using this criteria a selection is made of a quantization value out of the quantization set based upon the modified pixel value
3) Calculating the error value E(i,j) as the difference between the P'(i,j)-Q(i,j).
4) Modifying one or more of the unprocessed input pixels P(i,j) of the original image by adding to their value a fraction of the error E(i,j) in a way that the fractions add up to 1.0, for example using the "Floyd and Steinberg" error diffusion weights.

*Error diffusion with sub-dot phase modulation*

*General embodiment*

Using the previous explanation of the standard error diffusion as a basis, we will now explain a first possible embodiment of the invention.

Just like in standard error diffusion, the processing of an image consists of processing the image line-by-line and pixel-by-pixel. The ordering of the pixel processing within a line can be from left to right, from right to left or - preferably - according to a serpentine scan.

One distinguishing characteristic of the new method is that during the "quantization step" at a position (i,j) not just the value of pixel H(i,j) can be altered, but rather the values of a cluster of adjacent pixels H(x, y) around the position (i,j). Such a cluster can consist of a square, rectangular or circular arrangement of pixels, or it can have an arbitrary shape. The clusters of adjacent pixels can have dark values, representing "ink spots", or they can have light values, representing "ink voids". The clusters can contain a fixed or variable number of pixels (eventually including one pixel), but at least one of them should be contain more than one pixel. According to the method according to the invention, a quantization set containing the quantization values of the two alternatives - placing a cluster of dark or of light pixels - are evaluated, taking into account density value change upon an area corresponding to more than one pixel in the output image and the overlap of the clusters with clusters that were placed in a prior image-processing step. The one alternative quantization that most closely approximates the modified pixel value P'(i,j) is selected, the appropriate quantization error is calculated, taking into account pixel overlap, and this error value is distributed to at least one other input pixel.

It is specifically mentioned, that in the decision process of selecting one of the two alternatives - placing a cluster of dark or light pixels - not just the density value change in the output image of the area coinciding with the pixels of placed cluster of adjacent pixels is taken into account, but possibly also the surrounding area of the cluster that is affected by its placement.

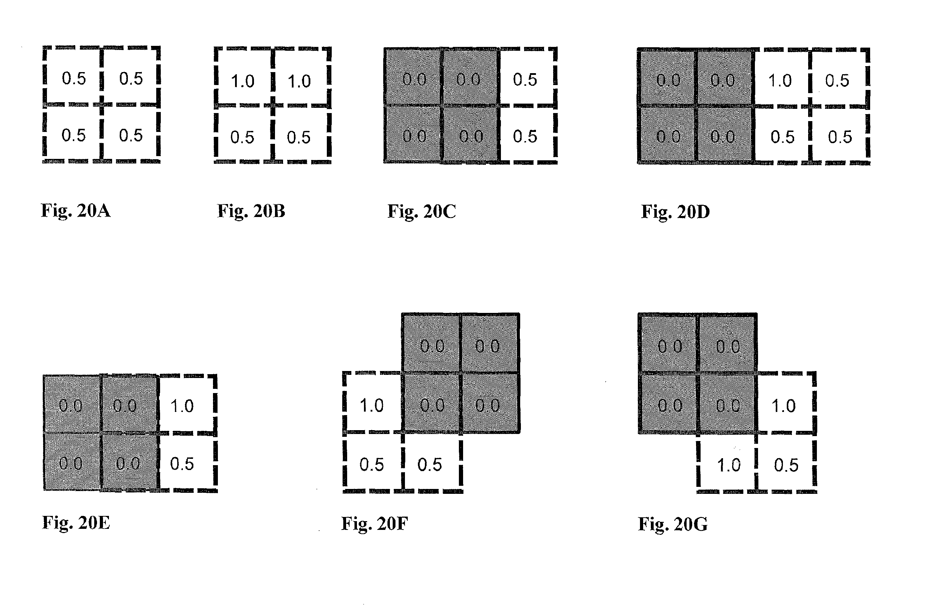

Using the notations, symbols and conventions in the previous explanation of standard error diffusion, the invention can now be generically described by the following sequence of operations that are also summarized in Figure 20.

The processing of a halftone dot at the input pixel position P'(i,j) consists of the following steps:

1) Determining the two possible quantized values $Q_1(i,j)$ and $Q_2(i,j)$ of the quantization set, that correspond to the distinct available cases of:

a. Placing a cluster of black pixels; the quantized value $Q_1(i,j)$ in that case corresponds to 0.5 - r*0.5 - s*1.0, in which "r" corresponds to the number of positions that are converted from 0.5 to 0.0 and "s" to the number of pixels that are turned from white (1.0) to 0.0 by placing this cluster of black pixels. It is allowed that a pixel that was made black in a previous step be made black again, but such a pixel is not counted in the determination of "r" to avoid "double counting" of the conversion of pixels from gray to black.

b. Placing a cluster of white pixels; the quantized value $Q_2(i,j)$ in that case corresponds to 0.5 + t*0.5 + u*1.0, in which "t" corresponds to the number of positions that are converted from 0.5 to 1.0 and "u" to the number of positions that are converted from black (0.0) to white (1.0). It is allowed that a pixel that was made white in a previous step be made white again, but such a pixel is not counted in the determination of "t" to avoid "double counting" of the conversion of pixels from gray to white.

The density value changes upon the areas in the output image of the two distinct cases is taken into acount.

2) Selecting a quantization value. If $Q_1(i,j)$ is closer to P'(i,j) then a cluster of output pixels H(i+x,j+y) around the position (i,j) is set to 0.0 (black) and Q (i,j)= $Q_1(i,j)$; else a cluster of output pixels H(i+x,j+y) is set to 1.0 (white) and Q(i,j)=$Q_2(i,j)$;

3) Calculating the error E(i,j) as the difference between the P'(i,j)-Q(i,j).

4) Modifying one or more of the unprocessed input pixels P(i,j) of the original image by adding a fraction of the error value E(i,j) to their value in a way that the fractions add up to 1.0.

Having described the algorithm in detail, we can now explain why and how the objects of the invention are achieved.
A first observation is that the new method of error diffusion allows the generation of halftone dots that are substantially larger than one pixel of the addressable grid of the plotting device, and that this enlargement achieves the objective of improving the printability of frequency modulation halftones.
It is also clear that the position of the halftone dots in the new method are controlled by an increment that is substantially smaller than the size of the halftone dots, it allows for the halftone dots to be placed at any arbitrary position of the pixel grid. The improved control over the phase of the halftone dots enables to achieve our objective to suppress the spatial rounding off effects that otherwise are the cause of disturbing artifacts near rational tone values - and this without the injection of noise into the algorithm.
Since with sub-dot phase modulation many more positions are available for the halftone dots within a single separation, more control is also available to avoid problems related to relative positions of the halftone dots in different separations in color printing.
Even in case that the dot positions would tend to be phase correlated, this correlation can be broken up with the introduction of a smaller amount of randomness into the algorithm than without sub-dot phase modulation.
These observations support the statement that for color printing applications with frequency modulation halftoning, the new method improves the stability and predictability of the color balance and avoids the occurrence of low frequency artifacts, without introducing an objectionable amount of graininess into the image.
The placement of white and black clusters can however be restricted by further rules. This means that not all distinct cases of placing the clusters are possible or available. Not all quantization values are to be calculated.

### *First specific embodiment: "white" clusters cannot overprint "black" clusters*

In a first typical and representative specific embodiment, restrictions are put on the rules of how the pixels of a cluster in a given processing step can alter the pixels of a cluster placed in a previous processing step. For example, it can be stated that a pixel that was made previously white is allowed to change its color into black in a next processing step, but that the opposite is not allowed. This rule corresponds to the intuitive notion that once ink has been placed on white paper, this cannot be undone anymore, while the printing of an ink spot that partially overlaps with one that was previously printed is perfectly possible.
The processing of a halftone dot at the pixel position P'(i,j) in this embodiment consists of the following steps:

1) Determining the quantization set of two possible quantized values $Q_1(i,j)$ and $Q_2(i,j)$, that correspond to the distinct cases of:

a. Placing a cluster of black pixels; the quantized value $Q_1(i,j)$ in that case corresponds to 0.5 - r*0.5 - s*1.0, in which "r" corresponds to the number of positions that are converted from 0.5 to 0.0 and "s" to the number of pixels that are turned from white (1.0) to 0.0 by placing this cluster of black pixels. It is allowed that a pixel that was made black in a previous step be made black again, but such a pixel is not counted in the determination of "r" to avoid "double counting" of the conversion of pixels from gray to black.

  b. Placing a cluster of white pixels; the quantized value $Q_2(i,j)$ in that case corresponds to 0.5 + t*0.5, in which "t" corresponds to the number of positions that are converted from 0.5 to 1.0. This way of counting reflects the assumption that a black pixel H(x,y)=0.0 cannot return to white H(x,y)=1.0 again.

 2) Selecting a quantization value. If $Q_1(i,j)$ is closer to P'(i,j) then a cluster of pixels H(i+x,j+y) around the position (i,j) is set to 0.0 (black) and Q(i,j)= $Q_1$(i,j); else a cluster of pixels H(i+x,j+y) is set to 1.0 (white) and Q(i,j)=$Q_2$(i,j);

 3) Calculating the error E(i,j) as the difference between the P'(i,j)-Q(i,j).

Modifying one or more of the unprocessed pixels P(i,j) of the original image to obtain a modified pixel value by adding a fraction of the error value E(i,j) to them in a way that the fractions add up to 1.0.

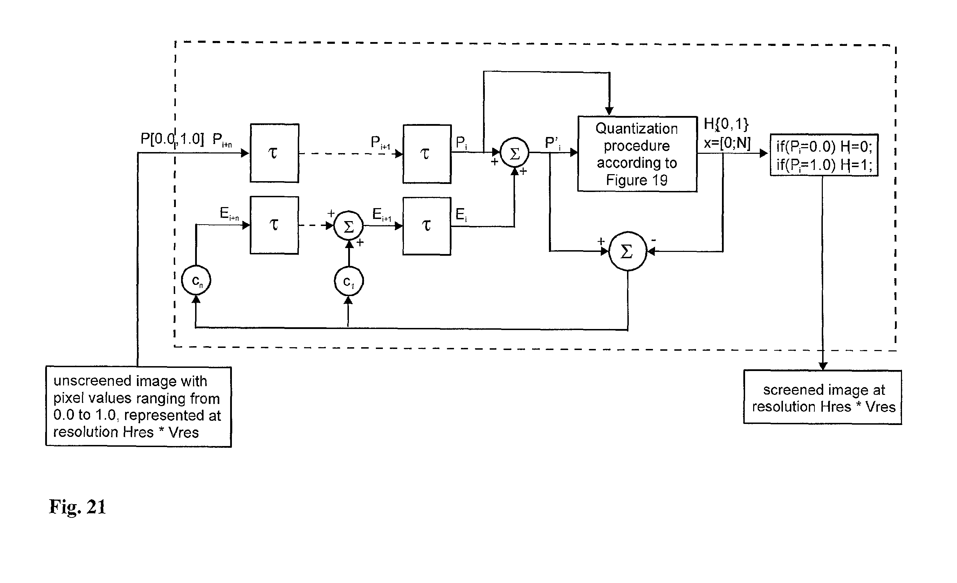

Figure 21 shows a number of representative cases that we would like to use to demonstrate the principles of the quantization in the above embodiment. Not all possible cases are shown, and the ones that are, do not necessarily correspond with the same tone values in the original image. It will become clear that alternative cases and situations are easily derived using the same principles.

The size of both the black and the white halftone dots in Figure 21 is assumed to be a two by two cluster of pixels. The processing takes place from left to right. The position (i,j) in the drawing corresponds with the upper left position in the dotted two by two cluster. The numbers in the squares represent the values H(x,y) BEFORE the quantization step. The first quantization option Q1(i,j) always corresponds with placing a black halftone dot, the second quantization option Q2(i,j) to placing a white halftone dot. It is assumed that black pixels cannot be made white again. As earlier explained, the objective of calculating Q1 (i,j) and Q2(i,j) is to determine which one of the two values most closely approximates the modified pixel value P'(i,j), after which the values of H(x,y) are definitively determined, the quantization error calculated and diffused to one or more of the unprocessed pixels. We will now discuss the different available cases in Figure 20A to 20G.

<u>Case 1: All the values of **H(x,y)** before the quantization step are 0.5.</u> Q1(i,j) is 0.5 - 4*0.5 =-1.5, because with this option the values of four gray pixels are decreased from gray to black. The quantized value of Q2(i,j) is 0.5+4*0.5 = 2.5, because with this option the values of the four gray pixels are increased from gray to white.

<u>Case 2: Two of the values of H(x,y) before the quantization are 1.0, the two others are 0.5.</u> Q1(i,j) is 0.5 - 2*0.5 - 2*1.0 = -2.5, because with this option the values of two gray pixels are decreased from gray to black, while also the value of two white pixels is decreased to black. The quantized value Q2(i,j) is 0.5+2*0.5 = 1.5, because the value of two pixels was increased from gray to white, while the values of two other pixels are left unaltered, since they were already at a value of 1.0. Their increase in value from gray to white had already been taken into account in previous processing steps and needs not to be further considered anymore in this step.

<u>Case 3: Two of the values of H(x,y) before the quantization are 0.0, the two others are 0.5.</u> Q1(i,j) is 0.5 - 2*0.5 = -0.5, because the values of two gray pixels are decreased to black, while the value of two black pixels is left unaltered and their decrease from a value of 0.5 to 0.0 had been taken into account in the previous processing steps. The quantized value Q2(i,j) is 0.5+2*0.5 = 1.5, because two pixels are converted from gray to white, while two black pixels cannot be overwritten with a white pixels so their values remain unaltered. The decrease of these values from 0.5 to 0.0 was already taken into account in a previous processing step and needs not to be considered anymore in this step.

<u>Case 4: One of the values of H(x,y) before the quantization is 1.0, the three others are 0.5.</u> Q1(i,j) is 0.5 - 3*0.5 - 1*1.0 = -2.0, because with this option the values of three gray pixels are decreased to black, while the value of one white pixel is decreased to black. The quantized value Q2(i,j) is 0.5+3*0.5 = 2.0, because the values of three pixels increase from gray to white, while the value of one pixel that was already white is not altered. Its increase from 0.5 to 1.0 was already taken into account in a previous processing step and needs not to be considered anymore in this step.

<u>Case 5: Two of the values of H(ix,y) before the quantization are 0.0, one is 0.5 and the fourth one is 1.0.</u> Q1(i,j) is 0.5 - 1*0.5 - 1*1.0 = -1.0, because with this option the value of one gray pixel is decreased to black, while the value of one white pixel is decreased to black. The two other pixels are left unaltered because they were black already, and their decrease from a value of 0.5 to 0.0 had been taken into account in the previous processing steps. The quantized value Q2(i,j) is 0.5+1*0.5 = 1.0. Two black pixels cannot be overwritten by white pixels so they keep their value, and their decrease in value from gray to black had already been taken into account in a previous processing step and needs no further consideration in this step; one pixel is converted from gray to white, and yet another one is left unaltered because it was already white and does not contribute anymore to Q2(i,j) in this processing step.

<u>Case 6: One of the values of H(x,y) before the quantization is 1.0, one is 0.0, and the two remaining are 0.5.</u> Q1(i,j) is 0.5 - 2*0.5 - 1*1.0 = -1.5, because with this option the value of two gray pixels is decreased to black, while the value of one white pixels is decreased to black and the value of one other black pixel is left unaltered. The quantized value Q2(i,j) is 0.5+2*0.5 = 1.5, because the value of two pixels increases from gray to white, while the value of two other pixels remain unaltered.

Case 7: Two of the values of H(x,y) before the quantization are 1.0, one is 0.0, and the remaining is 0.5. Q1(i,j) is 0.5 - 1*0.5 - 2*1.0 = -2.0, because with this option the value of one gray pixels is decreased to black, while the value of two white pixels is decreased to black and the value of one other black pixel is left unaltered. The quantized value Q2(i,j) is 0.5+1*0.5 = 1.0, because the value of only one pixel is increased from gray to white, while three other pixels values remain unaltered, either because they were white already, or because they were made black before and cannot be turned into white.

### Second specific embodiment: "white" clusters having a size of one pixel

In one other typical and representative embodiment, the black clusters have a fixed rectangular size and can overprint each other or white space, while the white "clusters" consist of only one pixel and can never overprint a black pixel.

We shall assume that the size of the black halftone dot is nxm pixels.

If the processing takes place from left to right, the halftone dot is referenced by the top left pixel (i,j) and placing a halftone dot at position (i,j) will cause the pixel values H(i+x,j+y) with $0<=x<m$ and $0<=y<n$ to go to 0.0 (black)

If the processing takes place from right to left, the halftone dot is referenced by the top right pixel (i,j) and placing a halftone dot at position (i,j) will cause the output pixel values H(i+x,j+y) with $-m<x<=0$ and $0<=y<n$ to go to 0.0 (black)

The processing of a modified pixel P'(i,j) than consists of the following steps:

1) Determining the quantization set of two possible (available) quantized values $Q_1(i,j)$ and $Q_2(i,j)$, that correspond to the distinct cases of:

a. Placing a black halftone dot; the quantized value $Q_1(i,j)$ in that case corresponds to 0.5 - f*0.5, in which f corresponds to the number of positions that are converted from 0.5 to 0.0 by placing the halftone dot. The positions that already were at a value of 0.0 as a result of a previous processing step are not counted in the determination of $Q_1(i,j)$ to avoid "double counting" of the conversion of pixels from gray to black.

b. Placing a white halftone dot. Depending on the value of H(i,j), two cases are to be distinguished:

i. Either H(i,j) was still at the preset value of 0.5; in that case H(i,j) is converted from 0.5 to 1.0 to become a white (1.0) pixel, and $Q_2(i,j)$ becomes 1.0 (white) to reflect the conversion of that pixel from gray to white.
ii. Or H(i,j) was previously set to 0.0 as a result of the placement of a black halftone dot in a previous processing step. Since a black pixel cannot be turned into a white pixel again, the value of H(i,j) remains at 0.0 and $Q_2(i,j)$ is set to 0.5, to reflect the fact that value at H(i,j) at position (i,j) was left unaltered in processing the pixel at position (i,j).

2) If $Q_1(i,j)$ is closer to P'(i,j) then the pixels H(i+x, j+y) of the halftone dot at position (i,j) are all set to 0.0 and Q(i,j)= $Q_1(i,j)$ else Q(i,j)=$Q_2(i,j)$ and H(i,j) can take two values corresponding to the cases (i) or (ii) explained for case 1 b.
3) Calculating the error E(i,j) as the difference between the P'(i,j)-Q(i,j).
4) Modifying one or more of the unprocessed pixels P'(i,j) of the original image by adding to them a fraction of the error value E(i,j) in a way that the fractions add up to 1.0.

It is clear that this method enables the exact control of the position of halftone dots consisting of a plurality of pixels on the pixel grid. The dots can be placed at any arbitrary position of the pixel grid to optimally represent the input image to be converted. Density value changes of an area in the output image are taken into account.

Having described a number of basic embodiments of the method according to the invention, we now continue by describing even more advanced concepts that use similar principles, but in addition offer other enhancements that further improve image quality.

### Third specific embodiment: variable halftone dot size

In the discussion of the existing art we mentioned already that the choice of an appropriate halftone dot size represents a compromise. It was explained that the graininess in highlight and shadow regions is reduced by printing with smaller halftone dots, while the stability of contrast and color balance in the midtones benefits from using a larger halftone dot. We also mentioned that the contours of solid text and graphics preferably are rendered with a halftone dot size of just one pixel.

In what follows we present a variation of the sub-dot phase modulation scheme that enables using a variable dot size for three different tonal ranges, Range1, Range2 and Range3, separated by the values SecondBorderToneValue and FirstBorderToneValue.

So the three tonal ranges are:

- Range1: [0.0,FirstBorderToneValue]
- Range2: [FirstBorderToneValue, SecondBorder-ToneValue]
- Range3: [SecondBorderToneValue,1.0]

Depending upon the position of the border values of the tonal Ranges, the terms Shadowborder and HighlightBorder could be used for the BorderToneValues. More generally stated, the cluster size can be adjusted depending upon the input pixel value.

We assume that the size of the halftone dot can alter between two sizes of n by m pixels or q by p, with q>n and p>m. In what follows, we denote the halftone dot size with a size of h by w pixels as hxw, with n<=h<=q and m<=w<=p

We assume that the halftone dot is referenced by the top left pixel (i,j) if the processing takes place from left to right. What this means is that placing a halftone dot at position (i,j) affects the pixel values H(i+x,j+y) with 0<=x<w and 0<=y<h. If the processing takes place from right to left, the halftone dot is referenced by the top right pixel (i,j). Placing a halftone dot at position (i,j) affects the pixel values H(i+x,j+y) with -w<x<=0 en 0<=y<h.

Using the notations, symbols and conventions in the previous explanation, the third embodiment of the invention can now be described as the following sequence of operations:

The processing of a halftone dot at the pixel position (i,j) consists of the following steps:

1. Determining the halftone dot size, as a function of the unmodified pixel value P(i,j):

a. If (P(i,j)<FirstBorderToneValue) than (halftone dot size (h,w) will be h=q and w=p)

b. If (SecondBorderToneValue >= P(i,j) >= FirstBorderToneValue) than (halftone dot size changes proportionally from h=q, w=p at First-BorderToneValue, till h=n, w=m at SecondBorderToneValue)

c. If (P(i,j) > SecondBorderToneValue) than (halftone dot size (h,w) will be h=n and w=m)

2. Determining the two possible quantized values $Q_1(i,j)$ and $Q_2(i,j)$, that correspond to the distinct cases of placing a halftone dot or not, calculating the error and modifying the unprocessed pixels with an amount of the error is exactly the same as described above in the case without variable dot size.

Even though the above example has been given for a tonal range subdivided into three sub-ranges, it should obvious to anyone skilled in the art that the same principles can be used for subdividing the tonal range into any number of sub-ranges. In yet another embodiment, the transition from one halftone dot size to another one does not occur at a fixed tonal value, but rather is spread out over a range of tonal values. This effect is for example obtained by determining the decision of the halftone dot size on the sum of P(i,j) and a small random number. The addition of a random number causes the transition from one dot size to another to occur randomly at a slightly higher or lower tonal values, yielding the desired effect of spreading out the transition from one halftone dot size to another one over a range of tonal values.

It is also possible to include a halftone dot distribution alteration step in low and high intensity image regions. The above embodiment can also be used to render solid text and line art with a cluster size of one pixel, so that their contours are rendered at full resolution. This can be done by setting the output value of the pixel to the corresponding minimum or maximum output value if the input pixel value is the minimum or maximum possible input value.

Yet another variation of the above embodiment uses halftone dots consisting of fewer pixels for the rendering of image areas containing a high degree of local contrast, such as textures or object boundaries than for image areas containing a low degree of local contrast.

For this to happen, an unmodified pixel is categorized as belonging to an area containing low local contrast, medium local contrast or high local contrast. Depending on to which category the pixel belongs, a large medium or small halftone dot size is produced. Categorizing the amount of local contrast is based on measuring the variation of unmodified pixel values in an area around the unmodified pixel P(i,j). A simplified approach simply uses the difference between the smallest and largest unmodified pixel value in the area around an unmodified pixel P(i,j). More sophisticated methods that rely on an analysis of the histogram of local neighborhoods are possible to quantify the degree of local contrast and to control the local halftone dot size.

### *Fourth specific embodiment: multilevel error diffusion with sub-dot phase modulation*

Multilevel frequency modulation is defined as a process in which the halftoned pixels can have more than two quantization values. Certain reproduction processes such as displays and certain inkjet printing processes are capable to reproduce multiple density levels for each individual colorant. In inkjet printing, this capability relies on modulating the size of a droplet, on selecting inks with different inks or a combination of both.

The halftoning method according to the present invention also works for multilevel halftoning processes. In the case of a multilevel frequency modulation with N levels (as opposed to two), the number of quantization alternatives as defined in any of the previous embodiments is simply increased from two (placing a cluster of black pixels or not) to N.

We explain this by means of a representative example. Imagine that the possible quantization values correspond to a set (0.00, 0.25, 0.50, 0.75, and 1.00}.

For each pixel cluster a quantization value has to be determined, which value is than allocated to each pixel. This allocation changes the density value of these pixels. Assuming that a given pixel was still at its initial value of 0.5, the following density value changes are possible for a multilevel halftoning process:

- from 0.5 to 0 = - 0.5

- from 0.5 to 0.25 = - 0.25

- no change = 0

- from 0.5 to 0.75 = + 0.25

- from 0.5 to 1 = + 0.5

The total change of density corresponding to all the pixels of a halftone dot are easily calculated and serves as a base to calculate the error that is to be diffused to the unprocessed pixels.

Just as with binary halftoning, certain rules and restrictions can be applied regarding how the value of a pixel is allowed to change as a function of its previous value. For example, Koen Vande Velde describes a monochromatic method with a restriction to possible output values in European patent application EP 1.239.660, "adequate quantization in multilevel halftoning". A restriction is applied to avoid dots with a conspicuously deviating density by restricting the possible difference between the input value of the pixel and the density of the multilevel output pixel.

Also restrictions for multilevel color printing are known.

One such method is the method of Koen Vande Velde of European Patent Application EP 1.239.662, "improved color halftoning for printing with multiple inks". In this method certain combinations of multilevel color values for output pixels resulting in deviating luminance values are excluded from the possible combinations.

It is also clear that the method according to the present invention can be applied to multilevel system having a different number of levels for each color.

### *Fifth specific embodiment: vector error diffusion with sub-dot phase modulation*

The above embodiments discuss the use of frequency modulation halftoning with sub-dot phase modulation for monochrome image reproduction. These embodiments can of course also be used for frequency modulation halftoning of the individual color separations in the context of color printing, or generally in the case that multiple ink separations are used for the printing. At least one of the color separated images can be halftoned using the method according to the invention.

According to a specific embodiment of the invention, however, the concept of sub-dot phase modulation is extended to control the relative position of the halftone dots in the different separations and take into account overlap characteristics of halftone dots of the different separated images. This is preferably done in a way that the luminance contrast of the resulting halftone dot pattern in the resulting overprint is minimized. Because the concept of sub-dot phase modulation allows for a more precise control in smaller increments of the relative position of the halftone dots in the different separations, this particular embodiment leads to a significantly lower level of halftoning graininess, compared with standard technologies.

In what follows we explain the different steps of an error diffusion scheme that use sub-dot phase modulation and optimizes the relative positions of the halftone dots in the different separations when converting an image comprising plural separated images. By convention, we assume in what follows that the range of the original color channels is [0.0,1.0].

The first step consists of determining for every position (i,j) in the image an intermediate luminance channel variable L(i,j) that is equal to the sum of the N original colorant pixel values at that same location:

$$L(i, j) = \sum_{x=1}^{N} P_x(i, j)$$

The range of this luminance channel is [0.0,N].

A next step consists of performing multilevel frequency modulation halftoning on this luminance channel. The number of levels equals N. In principle any type of multilevel frequency modulation halftoning technique can be employed, but preferably error diffusion is used, for example in combination with any of the improvements known in the existing art that referred to in the previous part of this document. The output of the multilevel error diffusion scheme consists of a quantized luminance channel L'(i,j) in which each pixel has value of the set {0,1,2,...N-1}. The quantized luminance channel is representative for the optimal luminance distribution of the combined overprint of the different colorant channels.

In a third step we perform vector error diffusion on the original color channels using, however, the output of the quantized luminance channel as an additional constraint in the quantization step. The vector error once again preferably employs any of the improvements known in the existing art that are referred to in the previous part of this document.

We explain now in detail the quantization step of a vector error diffusion process that uses the concept of sub-dot phase modulation. The quantization step consists of first determining the set of "valid quantization vector alternatives" and than selecting the most appropriate one.

In order to obtain a set of valid quantization alternatives, every modified colorant value $P'(i,j)_x$ is first multiplied with the number of pixels of which a halftone cluster consists. This multiplication recognizes the fact that not all halftone dots necessarily have the same size for reasons of and based on techniques that are laid out in the previous embodiments. The numbers that are obtained this way are ranked from smallest to largest. This ranking controls the order of the processing that is to follow next.

Assume, for example, that in the case of four-color printing, the numbers that are obtained from the previous ordering step are $c_1$, $c_2$, $c_3$,...$c_4$.

The first quantization vector alternative will be to place no halftone dot of any of the colorants. Following the conventions and methods presented in any of the flowcharts describing the previous embodiments, this leads to the quantization alternatives $Q2(c_1)$, $Q2(c_2)$, $Q2(c_3)$ and $Q2(c_4)$ for the four individual inks. The sum of these four values is called $QS_1$ and represents the luminance of the first quantization vector alternative:

$$QS_1 = Q2(c_1) + Q2(c_2) + Q2(c_3) + Q2(c_4)$$

A next possible quantization vector alternative consists of placing one single colorant halftone dot. If one halftone dot is to be placed, the first candidate is $c_1$ as this channel has the lowest value and "mostly needs darkening" by the placement of a halftone dot. Following the conventions and methods presented in any of the flowcharts describing the previous embodiments, this leads to the quantization alternatives $Q1(c_1)$, $Q2(c_2)$, $Q2(c_3)$ and $Q2(c_4)$ for the four individual inks. The sum of these four values is called $QS_2$ and represents the luminance of the second quantization vector alternative:

$$QS_2 = Q1(c_1) + Q2(c_2) + Q2(c_3) + Q2(c_4)$$

A third possible quantization vector alternative consists of placing two colorant halftone dots. The two best candidates are $c_1$ and $c_2$, as these two channels have the lowest values and are "most in need of darkening" by the placement of a halftone dot. Following the conventions and methods presented in any of the flowcharts describing the previous embodiments, this leads to the quantization alternatives $Q1(c_1)$, $Q1(c_2)$, $Q2(c_3)$ and $Q2(c_4)$ for the four individual inks. The sum of these four values is called $QS_2$ and represents the luminance of the third quantization vector alternative:

$$QS_3 = Q1(c_1) + Q1(c_2) + Q2(c_3) + Q2(c_4)$$

We continue this way until the five possible quantization vectors, represented by their luminance values $QS_1$, $QS_2$, $QS_3$, $QS_4$ and $QS_5$ are calculated.

At this stage we are ready to actually select the quantization vector. The value $QS_{i[1-N]}$ that most closely approximates the quantized luminance values $L'(i,j)$ is the quantization vector that is selected. By using this procedure it is achieved that luminance variations resulting from vector quantization follow the distribution $L'(i,j)$ that has resulted from the frequency modulation process on the luminance channel of the original image.

Now that the vector error diffusion quantization step has enabled us to determine which colorant channels at the position $(i,j)$ are to receive a halftone dot - and which channels not, we proceed with the actual error diffusion, meaning placing the halftone dot(s), calculating the errors and diffusing them to at least one unprocessed pixel in the corresponding colorant plane. This is done following the methods that were disclosed in the previous embodiments.

It is not always necessary to calculate the luminance values corresponding with all the possible quantization vector alternatives. If it is found, for example, that if $QS_1 < L'(i,j) < QS_2$, it is not necessary to calculate $QS_3$, $QS_4$ and $QS_5$, as the calculation of these additional luminance values does not affect the final outcome of the selection of the quantization vector alternative. This enables to improve the performance of the described algorithm.

The above procedure was explained in detail for the case of four colorants. The extension to the case of N inks, however, is straightforward.

Many other variations and enhancements are possible of the above embodiments, for example the use of diffusion weights that vary as a function of the colorant values or the position in the colorant vector space. Other variations include the use of colorants having essentially the same hue, but different densities or special colorants that aim at expanding the printable color gamut. Yet another variation could be to use the above method only on a subset of the colorants, or to perform error diffusion at resolutions that are different for the different colorants.

### *Examples of images processed according to the above embodiments*

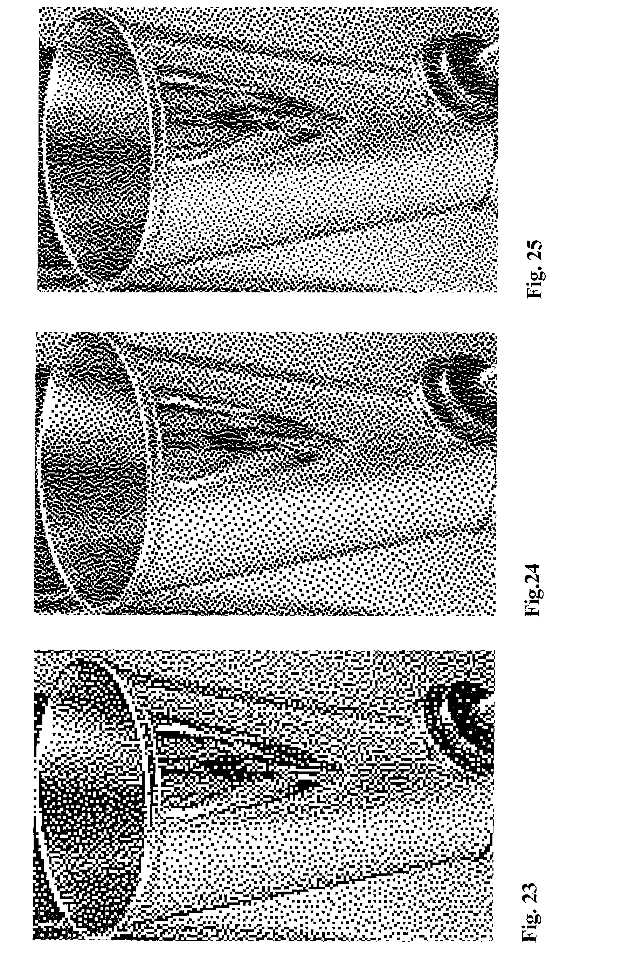

Figure 23 shows the resulting image of a state of the art halftoning method. The output image was obtained by using Floyd and Steinberg error diffusion in combination with serpentine scan and 50% perturbation of the weights, followed by two by two pixel replication. Figure 24 shows a halftoned image according to the present invention, also using halftone dots with a size of two by two pixels. As can be seen the image obtained using the method according to the present invention shows finer detail and lower graininess, while artifacts such as worm effects and patterning near the rational tone values are quasi absent. The halftone dots clearly have fewer tendencies to join and the inter-dot distance is controlled in a more precise manner. Figure 25 shows an example that uses error diffusion with sub-dot phase modulation and variable dot size.

Having described in detail preferred embodiments of the current invention, it will now be apparent to those skilled in the art that numerous modifications can be made therein without departing from the scope of the invention as defined in the appending claims.

**Claims**

1.  A method for frequency modulation halftoning using halftone dots in which at least one halftone dot consists of a cluster of adjacent pixels located on a pixel grid, **characterized in that** the cluster of adjacent pixels can be positioned at any arbitrary position of the pixel grid.

2.  The method according to claim 1 wherein said frequency modulation halftoning method is based on the error diffusion algorithm.

3.  The method according to claim 2 wherein for at least one pixel location a quantization set is determined wherein for at least one quantization value a cluster of at least two pixels is set.

4.  A method according to claim 2 to convert an image consisting of input pixels into an output image, the method comprising the steps of:

    -   determining

        -   a modified pixel that is based upon an input pixel value and
        -   a quantization set for the modified pixel value consisting of available quantization values, each quantization value corresponding to an available output pixel value combination of a cluster of pixels, said output pixel value combination resulting in a density value change in an output image;

    -   selecting a quantization value out of said quantization set based upon said modified pixel value;
    -   calculating an error value that depends on the modified pixel value and the selected quantization value;
    -   modifying at least one pixel by adding a fraction of the calculated error;

wherein the method takes into account the density value change of an area in the output image corresponding to more than one pixel.

5.  A method according to claim 4 wherein said cluster comprises at least two pixels.

6.  A method according to claim 4 wherein the pixels corresponding to the area in the output image coincide with the pixels of said cluster.

7.  A method according to claim 4 to 6 wherein said density value changes are taken into account in determining said available calculated quantization values of said quantization set for said pixel.

8.  A method according to claim 4 to 7 wherein said density value changes are taken into account in determining said modified pixel value for said pixel

9.  A method according to claim 4 to 8 wherein the clusters of pixels are unequal in size for at least two possible quantization values

10. A method according to claim 4 to 9 wherein the cluster size is adjusted depending on the input pixel value

11. A method according to claim 4 to 10 wherein the cluster size is adjusted depending on the local contrast of the pixels surrounding the input pixel

12. A method according to claim 4 to 11 wherein said method for error diffusion halftoning further comprises a halftone dot distribution alteration step in low and high intensity image regions.

13. A method according to claim 4 to 12 wherein the method for error diffusion halftoning is a multilevel halftoning method.

14. A method according to claim 4 to 13 wherein the output value of the pixel is set to the corresponding minimum or maximum output value if the input pixel value is the minimum or maximum possible input value.

15. A method for halftoning a color image comprising plural color separated images wherein at least one of the color separated images is halftoned using a method according to one of the preceding claims.

16. A method for error diffusion according to claim 2 to convert an image comprising plural separated images representing input pixels into an output image, the method comprising the steps of:

    -   determining

> - a modified pixel that is based upon an input pixel of a first separated image and
> - a quantization set for said modified pixel consisting of available quantization values, each quantization value corresponding to an available output pixel value combination of a cluster of output pixels, said output pixel value combination resulting in a density value change in an output image,
>
> - selecting a quantization value out of said quantization set based upon said modified pixel value,
> - calculating an error value that depends on the modified pixel value and the selected quantization value,
> - modifying at least one pixel by adding a fraction of the calculated error,
>
> wherein the method takes into account the density value change of an area in the output image corresponding to at least one pixel in a second separated image.

**17.** Method according to claim 16 wherein the overlap between halftone dots in different separated images is taken into account.

**18.** Method according to claim 16 or 17, in which the plural separated images represent plural color separations.

Fig. 1

Fig. 2

Fig. 3

EP 1 401 189 A1

**Fig. 4**

**Fig. 5**

**Fig. 6**

**Fig. 7**

**Fig.9**

**Fig. 8**

**Fig. 10**

EP 1 401 189 A1

Fig.12

Fig.14

Fig. 11

Fig. 13

EP 1 401 189 A1

Fig.16

Fig. 17

Fig. 15

Fig. 18

P'(i,j)

Fig. 19

0.5 | 0.5
0.5 | 0.5

**Fig. 20A**

1.0 | 1.0
0.5 | 0.5

**Fig. 20B**

0.0 | 0.0 | 0.5
0.0 | 0.0 | 0.5

**Fig. 20C**

0.0 | 0.0 | 1.0 | 0.5
0.0 | 0.0 | 0.5 | 0.5

**Fig. 20D**

0.0 | 0.0 | 1.0
0.0 | 0.0 | 0.5

**Fig. 20E**

0.0 | 0.0
1.0 | 0.0 | 0.0
0.5 | 0.5

**Fig. 20F**

0.0 | 0.0
0.0 | 0.0 | 1.0
1.0 | 0.5

**Fig. 20G**

EP 1 401 189 A1

P[0.0, 1.0] $P_{i+n}$

$\tau$

$P_{i+1}$

$\tau$

$P_i$

$\Sigma$ + +

$P'_i$

Quantization procedure according to Figure 19

H{0,1} x=[0;N]

if($P_i$=0.0) H=0; if($P_i$=1.0) H=1;

$E_{i+n}$

$\tau$

+ $\Sigma$ +

$E_{i+1}$

$\tau$

$E_i$

$c_n$

$c_1$

+ $\Sigma$ -

unscreened image with pixel values ranging from 0.0 to 1.0, represented at resolution Hres * Vres

screened image at resolution Hres * Vres

Fig. 21

Fig. 22

EP 1 401 189 A1

Fig. 25

Fig.24

Fig. 23

**European Patent Office**

**EUROPEAN SEARCH REPORT**

Application Number

EP 02 10 2364

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 696 132 A (XEROX CORPORATION) 7 February 1996 (1996-02-07) | 1-3 | H04N1/405 H04N1/52 |
| A | | 4-6,9, 10,16 | |
| | * column 3, line 48 - column 6, line 21 * --- | | |
| A | US 4 736 254 A (HIROAKI KOTERA ET AL.) 5 April 1988 (1988-04-05) * column 4, line 59 - column 5, line 3 * --- | 1 | |
| D,A | US 5 374 997 A (R. ESCHBACH) 20 December 1994 (1994-12-20) * abstract * --- | 1,2 | |
| A | US 5 757 976 A (J. S. SHU) 26 May 1998 (1998-05-26) * claim 1 * ----- | 12 | |

TECHNICAL FIELDS SEARCHED (Int.Cl.7)

H04N

The present search report has been drawn up for all claims

| Place of search | Date of completion of the search | Examiner |
|---|---|---|
| THE HAGUE | 13 February 2003 | De Roeck, A |

EPO FORM 1503 03.82 (P04C01)

**ANNEX TO THE EUROPEAN SEARCH REPORT
ON EUROPEAN PATENT APPLICATION NO.** EP 02 10 2364

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2003

| Patent document cited in search report | | Publication date | Patent family member(s) | | Publication date |
|---|---|---|---|---|---|
| EP 696132 | A | 07-02-1996 | US | 5608821 A | 04-03-1997 |
| | | | BR | 9503502 A | 28-05-1996 |
| | | | DE | 69526700 D1 | 20-06-2002 |
| | | | DE | 69526700 T2 | 12-09-2002 |
| | | | EP | 0696132 A2 | 07-02-1996 |
| | | | JP | 8065510 A | 08-03-1996 |
| US 4736254 | A | 05-04-1988 | JP | 61126870 A | 14-06-1986 |
| | | | JP | 1767086 C | 11-06-1993 |
| | | | JP | 4053143 B | 25-08-1992 |
| | | | JP | 61131682 A | 19-06-1986 |
| US 5374997 | A | 20-12-1994 | DE | 69309571 D1 | 15-05-1997 |
| | | | DE | 69309571 T2 | 27-11-1997 |
| | | | EP | 0581561 A2 | 02-02-1994 |
| | | | JP | 6113124 A | 22-04-1994 |
| US 5757976 | A | 26-05-1998 | DE | 69522284 D1 | 27-09-2001 |
| | | | DE | 69522284 T2 | 13-06-2002 |
| | | | EP | 0707410 A2 | 17-04-1996 |
| | | | JP | 8228288 A | 03-09-1996 |

EPO FORM P0459

For more details about this annex : see Official Journal of the European Patent Office, No. 12/82